# EUROPÄISCHE PATENTSCHRIFT

(11) **EP 0 589 315 B1**
(45) Veröffentlichungstag und Bekanntmachung des Hinweises auf die Patenterteilung: **15.01.1997**
(21) Anmeldenummer: 93114623.7
(22) Anmeldetag: 11.09.1993
(51) Int. Cl.: G01B 21/08, B29C 47/02

(54) **Einrichtung zum Messen der Schichtdicke eines in Richtung der Rohrachse kontinuierlich bewegten Rundrohrstranges aus Stahl**
Device for measuring the coating thickness of a steel tubular article moving continuously in its axial direction
Dispositif pour mesurer l'épaisseur du revêtement d'un tube en acier avançant en continu suivant la direction axiale

(30) Priorität: 24.09.1992 DE 9212869 U
(43) Veröffentlichungstag der Anmeldung: 30.03.1994
(73) Patentinhaber: Krupp Hoesch Tecna Aktiengesellschaft, 44137 Dortmund (DE)
(72) Erfinder: Wieting, Eugen, Dipl.-Ing., D-59071 Hamm (DE)

(56) Entgegenhaltungen:
- EP-A- 0 202 497
- GB-A- 2 217 835
- JP-A- 4 248 408
- PATENT ABSTRACTS OF JAPAN vol. 008, no. 031 (P-253)9. Februar 1984 & JP-A-58 186 010 (KAWASAKI SEITETSU KK) 29. Oktober 1983

## Beschreibung

Die Erfindung bezieht sich auf eine Rohrbeschichtungsanlage zum Außenbeschichten eines in Richtung der Rohrachse kontinuierlich bewegten Rundrohrstranges aus Stahl, mit einer Rohrvorschubvorrichtung, einer Rohrheizstation, einer Epoxidharz-Beschichtungsstation, einer Haftvermittler-Beschichtungsstation, einer Haftvermittler-Heizstation, einer Polyethylen-Beschichtungsstation, einer Polyethylen-Kühlstation, einer Schichtdickenmeßeinrichtung, einer Porenprüfvorrichtung, einer Rohrkennzeichnungsvorrichtung und einer Rohrtrennvorrichtung, wobei die Schichtdickenmeßeinrichtung die Schichtdicke der aus Epoxidharz-Haftvermittler und Polyethylen gebildeten Beschichtung mit einem um die Rohrachse drehbaren Meßkopf mißt.

Bei einer bekannten Rohrbeschichtungsanlage der vorgenannten Art mißt die Schichtdickenmeßeinrichtung die Schichtdicke der aus Epoxidharz, Haftvermittler und Polyethylen gebildeten Beschichtung mit einem Ultraschall-Meßkopf.

Einer solchen Schichtdickenmeßeinrichtung haftet der Nachteil an, daß Temperaturschwankungen in der Beschichtung die Meßgenauigkeit des Ultraschall-Meßkopfes ungünstig beeinflussen. Hiermit verbunden ist eine ungenaue Messung der Schichtdicke der Beschichtung.

Der Erfindung liegt die Aufgabe zugrunde, einen Meßkopf für eine Schichtdickenmeßeinrichtung einer eingangs genannten Rohrbeschichtungsanlage vorzuschlagen, mit dem eine genaue Messung der Schichtdicke auch bei Temperaturschwankungen in der Beschichtung ermöglicht wird.

Nach der Erfindung wird diese Aufgabe dadurch gelöst, daß der Meßkopf der Schichtdickenmeßeinrichtung einen Wirbelstrom-Sensor zum Vermessen der Außenkontur des Rundrohrstranges und einen Laser-Abstandssensor zum Vermessen der Außenkontur der Beschichtung aufweist und daß der Wirbelstrom-Sensor und der Laser-Abstandssensor in einem Abstand in Richtung der Rohrachse angeordnet sind, wobei der Abstand zwischen dem Wirbelstrom-Sensor und dem Laser-Abstandssensor dem Vorschub des Rundrohrstranges pro Umdrehung des Meßkopfes entspricht.

Durch das Dokument PATENT ABSTRACTS OF JAPAN, vol. 17, no. 23 (P-1470), 3. September 1992; Pub. No. JP-A-04 248 408, ist eine Schichtdickenmeßeinrichtung bekannt, deren Meßkopf einen Wirbelstrom-Sensor zum Vermessen der Außenkontur einer ebenen Stahlplatte und einen Laser-Abstandssensor zum Vermessen der Außenkontur der Farbbeschichtung besitzt.

Im folgenden wird die Erfindung anhand einer Zeichnung, in der ein Ausführungsbeispiel schematisch dargestellt ist, näher beschrieben.

Es zeigt
- Fig. 1: eine Schichtdickenmeßeinrichtung einer Rohrbeschichtungsanlage mit einem beschichteten Rundrohrstück im Schnitt,

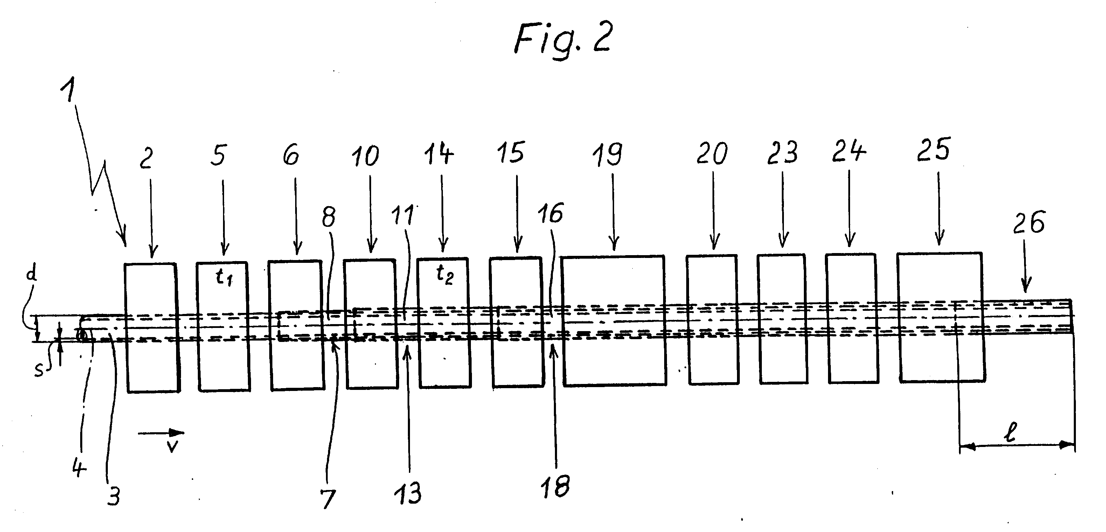

- Fig. 2: die Rohrbeschichtungsanlage in Form eines Blockbildes.

In einer Rohrbeschichtungsanlage 1 erteilt eine Rohrvorschubvorrichtung 2 einem Rundrohrstrang 3 aus Stahl eine kontinuierliche Geschwindigkeit v in Richtung der Rohrachse 4.

Der Rundrohrstrang 3 hat einen Außendurchmesser d und eine Wandstärke s.

Der Rohrvorschubvorrichtung 2 ist eine Rohrheizstation 5 nachgeordnet, in der der Rundrohrstrang 3 auf eine Beschichtungstemperatur t₁ aufgeheizt wird.

Hiernach wird der aufgeheizte Rundrohrstrang 3 in einer EpoxidharzBeschichtungsstation 6 mit Epoxidharz gleichmäßig beschichtet, wodurch ein runder Verbundrohrstrang 7 mit einer äußeren Epoxidharzschicht 8 entsteht.

Die Dicke der Epoxidharzschicht 8 ist mit 9 bezeichnet.

Der Verbundrohrstrang 7 gelangt anschließend in eine Haftvermittler-Beschichtungsstation 10, in der eine Haftvermittlerschicht 11 mit einer Dicke 12 auf die Epoxidharzschicht 8 aufgetragen wird.

Aus der Haftvermittler-Beschichtungsstation 10 tritt somit ein runder Verbundrohrstrang 13 mit einer äußeren Haftvermittlerschicht 11 aus.

In einer Haftvermittler-Heizstation 14 wird nun die Haftvermittlerschicht 11 auf eine Beschichtungstemperatur t₂ aufgeheizt.

Sonach wird in einer Polyethylen-Beschichtungsstation 15 auf die Haftvermittlerschicht 11 eine Polyethylenschicht 16 mit einer Dicke 17 aufgetragen.

Dieser Beschichtungsvorgang führt zu einem runden Verbundrohrstrang 18, der sich aus dem Rundrohrstrang 3, der Epoxidharzschicht 8, der Haftvermittlerschicht 11 und der Polyethylenschicht 16 zusammensetzt.

Der Verbundrohrstrang 18 durchläuft danach nacheinander eine Polyethylen-Kühlstation 19 zum Kühlen der Polyethylenschicht 16, eine Schichtdickenmeßeinrichtung 20 zum Messen der Schichtdicke 21 der aus Epoxidharz, Haftvermittler und Polyethylen gebildeten Beschichtung 22, eine Porenprüfvorrichtung 23 zum Prüfen der Beschichtung 22 auf Porenfreiheit, eine Rohrkennzeichnungsvorrichtung 24 und eine Rohrtrennvorrichtung 25 zum Ablängen von einzelnen Verbundrohren 26 mit einer Länge 1.

Die Schichtdickenmeßeinrichtung 20 besteht im wesentlichen aus einer Drehvorrichtung 27, einem Meßkopf 28, einer Meßwertverarbeitungseinrichtung 29, einem Anzeige- und Aufzeichnungsgerät 30 und einer Schaltkombination 31.

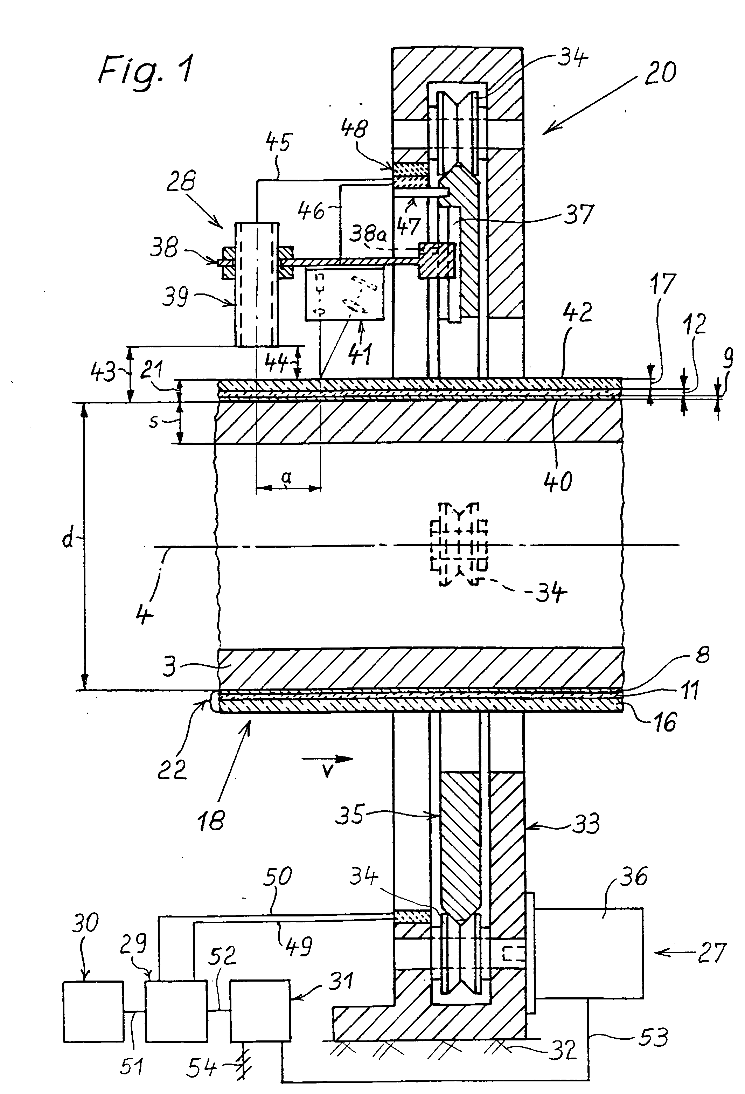

Die Drehvorrichtung 27 ist symmetrisch zu dem in Fig. 1 dargestellten Schnitt ausgeführt.

Sie hat ein auf einem Fundament 32 befestigtes Gestell 33 mit vier außerhalb des Verbundrohrstranges 18 angeordneten Fiihrungsrollen 34, die einen Drehring 35 zentrisch zu der Rohrachse 4 führen.

Zur Erzeugung der Drehbewegung des Drehringes 35 ist ein Motor 36 vorgesehen, der eine der vier Führungsrollen 34 antreibt.

Eine in dem Drehring 35 radial angeordnete Nut 37 dient der Aufnahme eines Halters 38 des Meßkopfes 28.

Die einwandfreie Drehmitnahme des Meßkopfes 28 durch den Drehring 35 gewährleistet eine zu dem Halter 38 gehörende Klemmvorrichtung 38a.

Der Meßkopf 28 weist einen Wirbelstrom-Sensor 39 zum Vermessen der Außenkontur 40 des Rundrohrstranges 3 und einen Laser-Abstandssensor 41 zum Vermessen der Außenkontur 42 der Beschichtung 22 auf.

Der Wirbelstrom-Sensor 39 und der Laser-Abstandssensor 41 sind in einem Abstand a in Richtung der Rohrachse 4 angeordnet.

Während der Rundrohrstrang 3 mit kontinuierlichem Vorschub in Richtung der Rohrachse 4 verschoben wird, bewirkt der Motor 36 eine kontinuierliche Drehbewegung des Meßkopfes 28.

Die Vermessung jeder Außenkontur 40, 42 erfolqt somit auf je einer Schraubenlinie gleicher Steigung.

Hierbei mißt der Wirbelstrom-Sensor 39 stets den von ihm eingenommenen Abstand 43 zu der Außenkontur 40 des Rundrohrstranges 3. Gleichzeitig mißt der Laser-Abstandssensor 41 den Abstand 44 zwischen dem Wirbelstrom-Sensor 39 und der Außenkontur 42 der Beschichtung 22.

Der Abstand a zwischen dem Wirbelstrom-Sensor 39 und dem Laser-Abstandssensor 41 entspricht dem Vorschub des Rundrohrstranges 3 pro Umdrehung des Meßkopfes 28.

Hiermit wird erreicht, daß der Wirbelstrom-Sensor 39 und der Laser-Abstandssensor 41 die Abstände 43, 44 stets an denselben Meßstellen messen.

Der Wirbelstrom-Sensor 39 und der Laser-Abstandssensor 41 sind über je eine Leitung 45, 46 an einen Schleifübertrager 47 angeschlossen.

Der Schleifübertrager 47 ist an dem Drehring 35 befestigt.

Die Verbindung zwischen dem Schleifübertrager 47 und der Meßwertverarbeitungseinrichtung 29 ist hergestellt über einen an dem Gestell 33 angebrachten Schleifring 48 und zwei Leitungen 49, 50.

Die Meßwertverarbeitungseinrichtung 29 ermittelt die Schichtdicke 21 der Beschichtung 22 aus der Differenz der Abstände 43, 44.

Die ermittelte Schichtdicke 21 wird angezeigt und aufgezeichnet in dem Anzeige- und Aufzeichnungsgerät 30, das über eine Leitung 51 mit der Meßwertverarbeitungseinrichtung 29 verbunden ist.

Die Meßwertverarbeitungseinrichtung 29 und der Motor 36 sind über je eine Leitung 52, 53 an die Schaltkombination 31 angeschlossen.

Gespeist wird die Schaltkombination 31 von einem Stromnetz 54.

## Patentansprüche

1. Rohrbeschichtungsanlage zum Außenbeschichten eines in Richtung der Rohrachse kontinuierlich bewegten Rundrohrstranges (3) aus Stahl, mit einer Rohrvorschubvorrichtung (2), einer Rohrheizstation (5), einer Epoxidharz-Beschichtungsstation (6), einer Haftvermittler-Beschichtungsstation (10), einer Haftvermittler-Heizstation (14), einer Polyethylen-Beschichtungsstation (15), einer Polyethylen-Kühlstation (19), einer Schichtdickenmeßeinrichtung (20), einer Porenprüfvorrichtung (23), einer Rohrkennzeichnungsvorrichtung (24) und einer Rohrtrennvorrichtung (25), wobei die Schichtdickenmeßeinrichtung (20) die Schichtdicke der aus Epoxidharz, Haftvermittler und Polyethylen gebildeten Beschichtung mit einem um die Rohrachse drehbaren Meßkopf (28) mißt, dadurch gekennzeichnet**,** daß der Meßkopf (28) der Schichtdickenmeßeinrichtung (20) einen Wirbelstrom-Sensor (39) zum Vermessen der Außenkontur (40) des Rundrohrstranges (3) und einen Laser-Abstandssensor (41) zum Vermessen der Außenkontur (42) der Beschichtung (22) aufweist und daß der Wirbelstrom-Sensor (39) und der Laser-Abstandssensor (41) in einem Abstand (a) in Richtung der Rohrachse (4) angeordnet sind, wobei der Abstand (a) zwischen dem Wirbelstrom-Sensor (39) und dem Laser-Abstandssensor (41) dem Vorschub des Rundrohrstranges (3) pro Umdrehung des Meßkopfes (28) entspricht.

## Claims

1. Pipe coating machine for the purpose of coating the periphery of a steel circular pipe (3) which is moving continuously in the direction of the pipe axis, comprising a pipe feeding device (2), a pipe heating station (5), an epoxy resin-coating station (6), an adhesive agent coating station (10), an adhesive agent heating station (14), a polyethylene coating station (15), a polyethylene cooling station (19), a layer thickness measuring device (20), a pore checking device (23), a pipe identification device (24) and a pipe separating device (25), wherein the layer thickness measuring device (20) measures the layer thickness of the coating formed from epoxy resin, adhesive agent and polyethylene using a measuring head (28) which rotates about the pipe axis, characterised in that the measuring head (28) of the layer thickness measuring device (20) comprises an eddy current sensor (39) for the purpose of measuring the outer contour (40) of the circular pipe (3) and comprises a laser distance sensor (41) for the purpose of measuring the outer contour (42) of the coating (22) and that the eddy current sensor (39) and the laser distance sensor (41) are disposed at a spaced interval (a) in the direction of the pipe axis (4), wherein the spaced interval (a) between the eddy current sensor (39) and the laser distance sensor (41) corresponds to the feed of the circular pipe (3) per rotation of the measuring head (28).

## Revendications

1. Dispositif de revêtement de tube, pour le revêtement extérieur d'un tronçon de tube rond (3) en acier déplacé en continu dans la direction de l'axe du tube, comportant un dispositif (2) d'avancement du tube, un poste (5) de chauffage du tube, un poste (6) de revêtement par une résine époxy, un poste (10) de revêtement par un adjuvant d'adhérence, un poste (14) de chauffage de l'adjuvant d'adhérence, un poste (15) de revêtement par du polyéthylène, un poste (19) de refroidissement du polyéthylène, un dispositif (20) de mesure de l'épaisseur de couche, un dispositif (23) d'examen de la porosité, un dispositif (24) de marquage du tube et un dispositif (25) de découpe du tube, dans lequel le dispositif (20) de mesure de l'épaisseur de couche mesure, au moyen d'une tête de mesure (28) pouvant tourner autour de l'axe du tube, l'épaisseur de la couche du revêtement constitué de résine époxy, d'adjuvant d'adhérence et de polyéthylène, caractérisé en ce que la tête de mesure (28) du dispositif (20) de mesure de l'épaisseur de couche présente un détecteur (39) à courants de Foucault pour mesurer le profil extérieur (40) du tronçon de tube rond (3), et un détecteur (41) de distance à laser pour mesurer le profil extérieur (42) du revêtement (22), et en ce que le détecteur (39) à courants de Foucault et le détecteur (41) de distance à laser sont disposés à une distance (a) dans la direction de l'axe (4) du tube, la distance (a) entre le détecteur (39) à courants de Foucault et le détecteur (41) de distance à laser correspondant à l'avance du tronçon du tube rond (3) pour chaque rotation de la tête de mesure (28).
